# FASCICULE DE BREVET EUROPEEN

(11) **EP 3 924 611 B1**
(45) Date de publication et mention de la délivrance du brevet: **03.01.2024**
(21) Numéro de dépôt: 20707735.5
(22) Date de dépôt: 10.02.2020
(51) Int. Cl.: F02K 1/60, F02K 1/76

(54) **SYSTÈME DE FERMETURE DE PORTES POUR INVERSEUR DE POUSSÉE D'UNE NACELLE D'AÉRONEF**
KLAPPENSCHLIESSSYSTEM FÜR SCHUBUMKEHRER EINER FLUGZEUGGONDEL
DOOR-CLOSING SYSTEM FOR A THRUST REVERSER OF AN AIRCRAFT NACELLE

(30) Priorité: 14.02.2019 FR 1901500
(43) Date de publication de la demande: 22.12.2021
(73) Titulaire: Safran Nacelles, 76700 Gonfreville-l'Orcher (FR)
(72) Inventeur: CARUEL, Pierre, 77550 MOISSY CRAMAYEL (FR); DESCAMPS, Alexandre, 77550 MOISSY CRAMAYEL (FR)
(74) Mandataire: Germain Maureau
(86) Numéro de dépôt international: PCT/FR2020/050232
(87) Numéro de publication internationale: WO 2020/165532

(56) Documents cités:
- EP-A2- 1 903 205
- FR-A1- 3 027 066
- US-A- 5 826 823
- US-A1- 2017 342 942

## Description

L'invention concerne un système de fermeture de portes pour inverseur de poussée d'une nacelle, et plus particulièrement un système de fermeture de portes pivotantes via des bielles.

Afin de raccourcir la distance de freinage d'un aéronef équipé de turboréacteurs chacun entouré par une nacelle assurant un guidage d'un flux de gaz généré par le turboréacteur, il est connu d'équiper l'aéronef d'au moins un inverseur de poussée. Une nacelle présente généralement une structure comprenant une entrée d'air en amont du moteur, une section médiane destinée à entourer une soufflante ou les compresseurs du turboréacteur et son carter, et une section aval pouvant abriter des moyens d'inversion de poussée et destinée à entourer la chambre de combustion du turbomoteur, et est généralement terminée par une tuyère d'éjection dont la sortie est située en aval du turboréacteur.

En outre, une nacelle comprend usuellement une structure externe comprenant l'entrée d'air, la section médiane et la section aval, et une structure interne fixe, dite Inner Fixed Structure (IFS), concentrique de la section aval, entourant le coeur du turboréacteur en arrière de la soufflante. Ces structures externe et interne définissent un canal annulaire d'écoulement, encore appelé veine secondaire, visant à canaliser un flux d'air froid, dit secondaire, qui circule à l'extérieur du turboréacteur. L'inverseur de poussée comprend des éléments mobiles d'inversion de poussée, généralement deux éléments mobiles d'inversion de poussée, portés par la nacelle pour se déplacer entre une position de fermeture dans laquelle l'inverseur de poussée est inactif, on parle de jet direct, et une position d'ouverture dans laquelle l'inverseur de poussée est actif, on parle de jet inversé.

Dans la position de jet inversé, l'inverseur de poussée renvoie au moins une partie du flux de gaz généré par le turboréacteur dans la direction inverse au flux guidé par la nacelle.

Dans un type d'inversion de poussée, les éléments mobiles d'inversion sont des portes.

Dans certains inverseurs de poussée à portes existants, la position des portes est commandée par des vérins double effet ou simple effet, lesdits vérins étant disposés sur la nacelle et reliés aux extrémités latérales des portes par des bielles, afin de déplacer ces portes.

Un vérin double effet comprend deux chambres pouvant être mises en communication avec un fluide, indépendamment l'une de l'autre, afin d'exercer une force dans un sens ou dans l'autre. En revanche, un vérin simple effet ne comporte qu'une chambre pouvant être mise en communication avec un fluide, afin d'exercer une force dans un seul sens (ouverture ou fermeture).

Par « extrémité latérale » d'une porte, on entend un côté de la porte, disposé perpendiculairement aux parois amont et aval desdites portes ; les parois amont et aval étant les parois disposées respectivement du côté amont et du coté aval de la nacelle, selon la direction d'écoulement du flux de gaz généré par le turboréacteur. Dans le cas d'un inverseur de poussée comportant deux portes opposées et des vérins à simple effet, il est connu de disposer un vérin d'ouverture sur un côté de la nacelle proche d'une extrémité latérale des portes, et un vérin de fermeture sur un côté de la nacelle diamétralement opposé au côté de fixation du vérin d'ouverture, relativement à un axe le long duquel s'étend la nacelle, soit proche de l'autre extrémité latérale des portes. Chaque vérin est relié à chacune des portes par l'intermédiaire d'une bielle, afin de permettre l'ouverture ou la fermeture des portes. Ainsi, chaque vérin est relié à deux bielles, et chaque porte est maintenue ouverte par deux bielles disposées à chacune de ses extrémités latérales, chaque bielle étant reliée à un vérin différent. Les bielles permettent en outre de transmettre les efforts des portes vers la structure fixe lorsque les portes sont en position ouverte. Ainsi, en position de jet inversé, chaque porte dispose d'une reprise d'efforts sensiblement équilibrée latéralement par deux bielles disposées à chacune de ses extrémités latérales.

Dans le cas d'un inverseur de poussée comportant deux portes opposées et un unique vérin à double effet ou à simple effet de fermeture, il est connu de disposer ledit vérin sur un côté de la nacelle proche d'une extrémité latérale des portes, ledit vérin étant relié à chacune des portes par l'intermédiaire d'une première bielle, afin de permettre l'ouverture et la fermeture des portes. Un organe coulissant, relié à chacune des portes par l'intermédiaire d'une deuxième bielle, est en outre disposé sur un côté de la nacelle diamétralement opposé au côté de fixation du vérin à double effet, relativement à un axe le long duquel s'étend la nacelle, soit proche de l'autre extrémité latérale des portes.

Les premières bielles permettent donc à la fois de manoeuvrer les portes et de transmettre les efforts des portes vers la structure fixe lorsque les portes sont en position ouverte. Les deuxièmes bielles permettent de transmettre les efforts des portes vers la structure fixe lorsque les portes sont en position ouverte. Ainsi, chaque porte dispose d'une reprise d'efforts sensiblement équilibrée latéralement par deux bielles, respectivement première, disposées à chacune de ses extrémités latérales. Usuellement, lors de la rupture d'une bielle, les efforts ne sont repris que par une bielle, et de façon asymétrique.

Un inconvénient de l'art antérieur est alors qu'il est nécessaire de dimensionner chaque porte de sorte qu'une seule bielle puisse transmettre les efforts des portes vers la structure fixe lorsque les portes sont en position ouverte, et ce pour un grand nombre de cycles de fonctionnement. En effet, à ce jour la rupture d'une bielle n'est pas détectable. Les documents EP1903205B1, US5826823A, US2017342942A1 et FR3027066A1 divulguent des inverseurs de poussée selon l'art antérieur.

Un but de la présente invention afin de remédier à l'inconvénient précité est alors de permettre de détecter des ruptures de bielles d'inverseurs de poussée à portes.

A cet effet l'invention a pour objet un système de fermeture d'une paire de portes pour inverseur de poussée d'une nacelle d'aéronef, les portes étant diamétralement opposées et montées pivotantes entre une position de jet direct, dans laquelle elles assurent la continuité aérodynamique de la nacelle, et une position de jet inversé dans laquelle elles ouvrent au moins un passage dans la nacelle, caractérisé en ce que le système de fermeture comprend :
- un actionneur de fermeture des portes comportant deux premières bielles, chaque première bielle étant configurée pour être reliée à un premier bord latéral de chaque porte, ledit actionneur étant agencé pour manoeuvrer chaque porte au moins vers la position de jet direct,
- deux organes coulissants portant chacun une deuxième bielle configurée pour être reliée au bord latéral opposé au premier bord latéral de chaque porte, lesdites bielles étant agencées pour être entrainées par les portes lorsque l'actionneur de fermeture manoeuvre les portes vers la position de jet direct, de façon à déplacer les organes coulissants, et
- un dispositif de détection de rupture d'une bielle agencé pour détecter la position relative des organes coulissants en position de jet direct.

Les premières et deuxièmes bielles sont des supports pour les portes en position de jet inversé, permettant le passage des efforts des portes vers une structure fixe de la nacelle.

Ainsi, le système selon l'invention permet de détecter des ruptures de bielles d'inverseurs de poussée à portes après un cycle de fonctionnement, c'est à dire après un cycle d'ouverture et de fermeture des portes.

Les portes peuvent être identiques ou différentes.

Dans un mode de réalisation, l'actionneur de fermeture est agencé pour manoeuvrer les portes vers la position de jet direct et vers la position de jet inversé.

Selon ce mode de réalisation, l'actionneur de fermeture est un vérin double effet et le système de fermeture est un système d'actionnement permettant l'ouverture et la fermeture des portes.

Dans un autre mode de réalisation, l'actionneur de fermeture est agencé pour manoeuvrer les portes vers la position de jet direct.

Selon ce mode de réalisation, l'actionneur de fermeture est un vérin simple effet et le système de fermeture est un système d'actionnement permettant la fermeture des portes.

Dans un autre mode de réalisation, l'actionneur de fermeture est agencé pour manoeuvrer les portes vers la position de jet direct, et le système de fermeture comprend un actionneur d'ouverture agencé pour manoeuvrer les portes vers la position de jet inversé via les deuxièmes bielles.

Selon ce mode de réalisation, l'actionneur de fermeture et l'actionneur d'ouverture sont des vérins simple effet et le système de fermeture est un système d'actionnement permettant l'ouverture et la fermeture des portes.

Lors de la fermeture des portes, un organe coulissant associé à une deuxième bielle rompue n'est pas déplacé par la deuxième bielle qui est rompue. Il est donc décalé par rapport à un organe coulissant associé à une deuxième bielle fonctionnelle.

De la même manière, lors de la fermeture des portes, lorsqu'une première bielle est rompue, la porte associée reste en position ouverte et l'organe coulissant associé à cette porte n'est pas déplacé par la deuxième bielle à laquelle il est associé. Il est donc décalé par rapport à un organe coulissant associé à une porte fermée.

Le dispositif de détection détecte alors la rupture d'une première ou deuxième bielle en comparant la position relative des deux organes coulissants.

Selon une caractéristique, le système de fermeture comporte un ressort disposé aux extrémités proximales de chaque organe coulissant, par rapport au dispositif de détection de rupture d'une bielle, et une butée de fin de course disposée entre le dispositif de détection de rupture d'une bielle et chaque ressort. Les butées de fin de course sont reliées par un dispositif de liaison. Chaque ressort permet d'exercer une force contre l'organe coulissant associé, dans la direction opposée au déplacement engendré par les deuxièmes bielles entrainées par les portes en position de jet direct. Chaque ressort est conçu pour être comprimé par l'organe coulissant associé lorsque les deuxièmes bielles sont entrainées par les portes en position de jet direct.

Les butées de fin de course et le dispositif de liaison permettent le passage des efforts de jet inverse.

Selon une caractéristique, les butées de fin de course et le dispositif de liaison sont fixes.

Selon une caractéristique, les butées de fin de course et le dispositif de liaison sont coulissants.

Selon cette caractéristique, les butées de fin de course et le dispositif de liaison forment un élément glissant comportant deux logements, chaque logement comportant un organe coulissant, un ressort et une butée de fin de course. L'élément glissant est conçu pour coulisser sous l'action d'au moins une des deuxièmes bielles, lorsque le ressort est comprimé dans le sens de la fermeture.

En position de jet direct, un jeu est présent entre l'élément glissant et l'extrémité opposée au ressort comprimé de chaque organe coulissant associé à une deuxième bielle fonctionnelle.

Une porte associée à une première bielle rompue est fermée lors du coulissement de l'élément glissant dans le sens de la fermeture sous l'action de la deuxième bielle de la porte associée à la première bielle fonctionnelle. La porte associée à la première bielle rompue est fermée avec un décalage par rapport à la porte associée à la première bielle fonctionnelle.

L'élément glissant permet le passage des efforts pendant l'ouverture et en jet inverse et permet d'empêcher une ouverture violente des portes en cas de rupture d'une première bielle pendant l'ouverture.

Selon une caractéristique, le système de fermeture comporte une commande d'actionnement de l'actionneur de fermeture, électrique et/ou hydraulique.

Selon une caractéristique, le système de fermeture tel que décrit précédemment, comprend en outre un système de verrouillage des portes en position fermée.

Un tel système de verrouillage est agencé pour être actionné lorsque le système de détection ne détecte pas de rupture de bielle.

Selon une caractéristique, le système de verrouillage de portes est un système de verrouillage actif comportant au moins un moyen de verrouillage actif capable d'assister la fermeture des portes en appliquant un effort fermant celles-ci, ledit moyen de verrouillage actif étant mobile entre une position de verrouillage et une position de déverrouillage.

Le système de verrouillage actif est configuré pour être disposé du côté opposé à l'actionneur de fermeture.

Des moyens de verrouillage actifs sont des moyens permettant le verrouillage et la fermeture, au moins sur une partie de la fin de course des portes.

Selon d'autres caractéristiques de l'invention, le système de verrouillage actif comporte l'une ou plusieurs des caractéristiques optionnelles suivantes considérées seules ou selon toutes les combinaisons possibles :
- une commande d'actionnement du système de verrouillage électrique et/ou hydraulique, et de préférence mécanique ;
- un actionneur du moyen de verrouillage actif commandé par la commande d'actionnement du système de verrouillage ;
- la commande d'actionnement du système de verrouillage est identique à la commande d'actionnement de l'actionneur de fermeture, ainsi une seule commande permet d'actionner la fermeture et le verrouillage/déverrouillage ;
- au moins un moyen de blocage du moyen de verrouillage actif en position déverrouillée, mobile entre une position de blocage et une position de déblocage ;
- un dispositif de déplacement du moyen de blocage destiné à déplacer le moyen de blocage en position de déblocage lorsque les portes sont à une position prédéterminées, de sorte que le moyen de verrouillage actif ne puisse verrouiller la porte que lorsque la porte est à une position prédéterminée, bien que le verrouillage ait été actionné lors de la commande en fermeture de la porte ;
- le moyen de verrouillage comporte au moins un crochet ;
- l'actionneur du moyen de verrouillage est un vérin ;
- le moyen de blocage comporte deux bras articulés, un premier bras étant relié de manière fixe au moyen de verrouillage et l'autre bras étant relié de manière fixe à la structure fixe ;
- une butée fixe est destinée à être disposée sur la structure fixe, de sorte à limiter le mouvement du bras relié à la structure fixe au-delà d'un certain angle pour assurer la fonction de blocage ;
- le dispositif de déplacement du moyen de blocage est destiné à être mécaniquement lié à l'élément mobile, par exemple le dispositif de déplacement est un organe coulissant du dispositif de coulissement tel que décrit précédemment, conçu pour coulisser lors de la fermeture de la porte à laquelle il est associé, en direction du moyen de blocage de façon à le déplacer en position de déblocage lorsque la porte est dans une position prédéterminée ;
- un ressort de blocage est destiné à exercer une force contre le moyen de blocage dans la direction opposée au déplacement du dispositif de déplacement du moyen de blocage lors de la fermeture de la porte, ledit ressort étant conçu pour être comprimé par le moyen de blocage lors du déplacement du dispositif de déplacement lors de la fermeture de la porte.

L'invention concerne également un inverseur de poussée d'une nacelle d'aéronef, l'inverseur de poussée étant du type comportant au moins une paire de portes diamétralement opposées, lesdites portes étant montées pivotantes entre une position de jet direct, dans laquelle elles assurent la continuité aérodynamique de la nacelle, et une position de jet inversé dans laquelle elles ouvrent au moins un passage dans la nacelle, caractérisé en ce que l'inverseur de poussée comprend un système de fermeture des portes tel que décrit précédemment.

L'invention concerne en outre un procédé d'utilisation d'un système de fermeture d'une paire de portes tel que décrit précédemment, caractérisé en ce qu'il comprend une étape de comparaison de la position relative des organes coulissants.

L'invention concerne enfin un procédé d'utilisation d'un système de fermeture d'une paire de portes tel que décrit précédemment, comportant un système de verrouillage tel que décrit précédemment, caractérisé en ce qu'il comprend une étape de verrouillage des portes en position de jet direct lorsque le système de détection de rupture de bielle ne détecte pas de décalage entre les organes coulissants.

D'autres caractéristiques et avantages de la présente invention apparaîtront à la lecture de la description qui va suivre et à l'examen des figures annexées dans lesquelles :
[Fig. 1] est une vue schématique en perspective d'une partie d'une section aval d'une nacelle comportant un inverseur de poussée à porte dont les portes sont en position de jet direct, montrant un actionneur de fermeture des portes d'un système de fermeture selon l'invention ;
[Fig. 2] est une vue schématique de côté de l'inverseur de poussée à porte de la figure 1, montrant l'actionneur de fermeture des portes, les portes étant en position de jet inversé ;
[Fig. 3] est une vue schématique de côté de l'inverseur de poussée à porte de la figure 2, vu depuis l'autre côté, montrant un élément glissant du système de fermeture de portes selon l'invention ;
[Fig. 4] est une vue schématique illustrant plus en détail l'élément glissant de la figure 3, les portes étant en position de jet direct ;
[Fig. 5] est une vue schématique illustrant l'élément glissant d'un système de fermeture de portes selon l'invention dont la première bielle inférieure est rompue, la porte supérieure étant en position de jet direct ;
[Fig. 6] est une vue schématique illustrant l'élément glissant d'un système de fermeture de portes selon l'invention dont la deuxième bielle inférieure est rompue ;
[Fig. 7] est une vue schématique en perspective d'une partie d'une section aval d'une nacelle comportant un inverseur de poussée à porte dont les portes sont en position de jet direct, et un système de fermeture selon l'invention comportant un système de verrouillage actif ;
[Fig. 8] est une vue schématique illustrant plus en détail le système de verrouillage actif de la figure 7 ;
[Fig. 9] est une vue schématique du système de verrouillage actif de la figure 7, en position de déverrouillage bloqué de portes en position ouverte ;
[Fig. 10] est une vue schématique du système de verrouillage actif de la figure 7, en position de déverrouillage débloqué de portes en cours de fermeture ;
[Fig. 11] est une vue schématique du système de verrouillage actif de la figure 7, en position de verrouillage actif de portes en cours de fermeture ;
[Fig. 12] est une vue schématique du système de verrouillage actif de la figure 7, en position de verrouillage débloqué de portes en position fermée ;
[Fig. 13] est une vue schématique du système de verrouillage actif de la figure 7, en position de verrouillage débloqué de portes en position sur-escamotée ;
[Fig. 14] est une vue schématique du système de verrouillage actif de la figure 7, en position de verrouillage bloqué de portes en position fermée.

Dans la description qui va suivre et dans les revendications, des composants identiques, similaires ou analogues seront désignés par les mêmes chiffres de référence et on emploiera les termes « amont », « aval », « horizontal », « vertical », « supérieur », « inférieur », etc. à titre non limitatif et en référence aux dessins afin de faciliter la description.

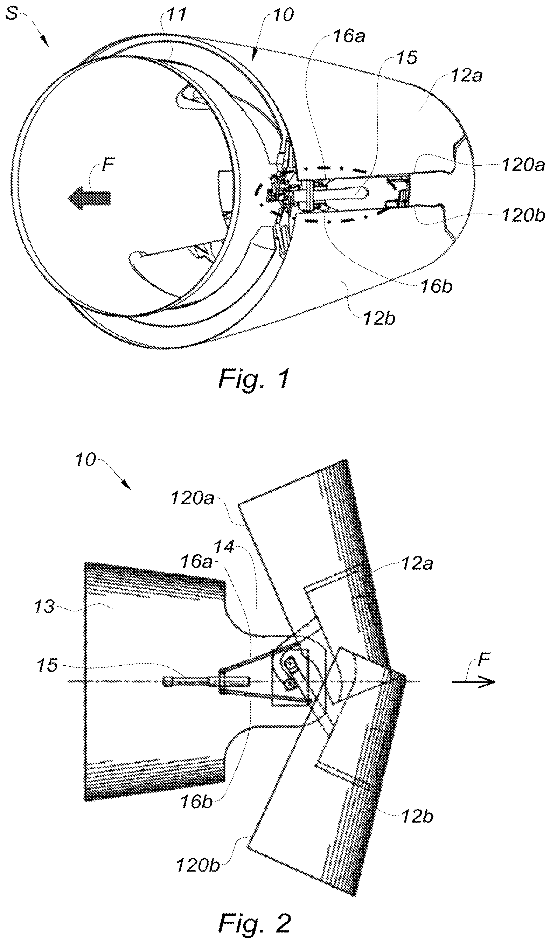

La figure 1 représente une partie d'une section aval S d'une nacelle, comprenant un inverseur de poussée 10.

La section aval S comporte une structure interne fixe 11 et une structure externe comportant une structure externe mobile comprenant deux portes, respectivement supérieure 12a et inférieure 12b, et une structure externe fixe 13 (figure 2) en amont de la structure externe mobile comprenant les portes 12a, 12b.

L'amont de la section aval S est défini par la flèche F.

Les portes supérieure 12a et inférieure 12b sont en position de jet direct. Elles sont montées pivotantes entre cette position de jet direct, dans laquelle elles assurent la continuité aérodynamique de la nacelle, et une position de jet inversé (figure 2) dans laquelle elles ouvrent au moins un passage 14 (figure 2) dans la nacelle.

La position de jet direct correspond à la position de fermeture (portes fermées) tandis que la position de jet inversé correspond à la position d'ouverture (portes ouvertes). Un vérin double effet 15 est disposé sur la structure interne fixe 11.

Le vérin double effet 15 est relié à chaque porte 12a, 12b par des premières bielles, respectivement supérieure 16a et inférieure 16b.

Chaque première bielle, respectivement supérieure 16a et inférieure 16b, est reliée à un premier bord latéral, respectivement supérieur 120a et inférieur 120b, de chaque porte, respectivement supérieure 12a et inférieure 12b.

Ainsi, le vérin double effet 15 est disposé sur la structure interne fixe, au niveau d'un premier bord latéral 120a, 120b des portes 12a, 12b.

Chaque première bielle 16a, 16b comporte une extrémité reliée à une porte 12a, 12b, et une extrémité opposée reliée au vérin double effet 15.

Le vérin double effet 15 est agencé pour manoeuvrer les portes 12a, 12b de la position de jet direct (figure 1) vers la position de jet inversé (figure 2) et de la position de jet inversé (figure 2) vers la position de jet direct (figure 1).

Le vérin double effet 15 est donc un actionneur de fermeture et un actionneur d'ouverture des portes 12a, 12b.

La figure 2 illustre l'inverseur de poussée 10 de la figure 1, les portes respectivement supérieure 12a et inférieure 12b, étant en position ouverte de jet inversé.

Comme indiqué précédemment, le vérin double effet 15 est relié à chaque premier bord latéral 120a, 120b, de chaque porte 12a, 12b par les premières bielles, respectivement supérieure 16a et inférieure 16b.

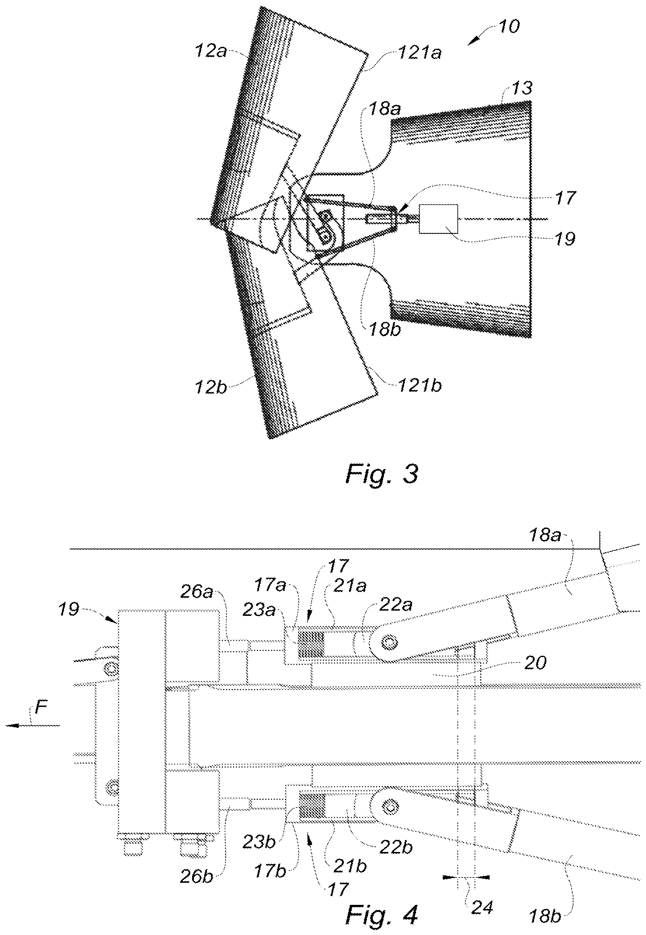

Comme l'illustre la figure 3, l'inverseur de poussée 10 comporte un élément glissant 17 disposé sur la structure interne fixe 11 (non représentée) du côté opposé au vérin double effet 15 (figure 2).

L'élément glissant 17 est relié à chaque porte 12a, 12b par des deuxièmes bielles, respectivement supérieure 18a et inférieure 18b.

L'inverseur de poussée 10 comporte en outre un dispositif de détection 19 de la rupture d'une bielle 16a, 16b, 18a, 18b, associé à l'élément glissant 17.

Chaque deuxième bielle, respectivement supérieure 18a et inférieure 18b, est reliée à un bord latéral, respectivement supérieur 121a et inférieur 121b, opposé au premier bord latéral, respectivement supérieur 120a et inférieur 120b, de chaque porte, respectivement supérieure 12a et inférieure 12b.

Ainsi, l'élément glissant 17 est disposé sur la structure interne fixe, au niveau du bord latéral 121a, 121b opposé au premier bord latéral 120a, 120b des portes 12a, 12b.

Les deuxièmes bielles 18a, 18b, sont agencées pour être entrainées par les portes 12a, 12b, lorsque le vérin double effet 15 (figure 2) manoeuvre les portes 12a, 12b, vers la position de jet direct (figure 1), en coulissant dans l'élément glissant 17.

La figure 4 illustre plus en détail l'élément glissant 17 et le dispositif de détection 19 de la rupture d'une bielle, de la figure 3.

L'élément glissant 17 comporte deux logements, respectivement supérieur 21a et inférieur 21b, dans lesquels coulissent des organes coulissants, respectivement supérieur 22a et inférieur 22b. Les logements sont reliés par un dispositif de liaison 20.

Des ressorts, respectivement supérieur 23a et inférieur 23b, sont disposés dans les logements, respectivement supérieur 21a et inférieur 21b, à l'amont des organes coulissants, respectivement supérieur 22a et inférieur 22b.

L'amont est représenté par la flèche F.

L'élément glissant 17 forme une butée de fin de course 17a, 17b, à l'amont de chaque organe coulissant 22a, 22b.

Chaque organe coulissant 22a, 22b porte une deuxième bielle 18a, 18b.

Ainsi, chaque deuxième bielle 18a, 18b comporte une extrémité reliée à une porte 12a, 12b, et une extrémité opposée reliée à un organe coulissant 22a, 22b.

Plus précisément, les deuxièmes bielles 18a, 18b, sont agencées pour être entrainées par les portes 12a, 12b lorsque le vérin double effet 15 (figure 2) manoeuvre les portes 12a, 12b vers la position de jet direct, de façon à déplacer les organes coulissants 22a, 22b auxquels elles sont reliées.

Chaque ressort 23a, 23b est conçu pour être comprimé par l'organe coulissant 22a, 22b auquel il est associé, lorsque les deuxièmes bielles 18a, 18b sont entrainées par les portes 12a, 12b en position de jet direct.

En outre, chaque ressort 23a, 23b, permet d'exercer une force contre l'organe coulissant 22a, 22b auquel il est associé, dans la direction opposée au déplacement engendré par les deuxièmes bielles 18a, 18b, entrainées par les portes 12a, 12b en position de jet direct, et est conçu pour être comprimé par l'organe coulissant 22a, 22b auquel il est associé, lorsque les deuxièmes bielles 18a, 18b sont entrainées par les portes 12a, 12b en position de jet direct.

Ainsi, en position de jet direct, les ressorts 23a, 23b sont comprimés par les organes coulissants 22a, 22b, et un jeu 24 est présent dans chaque logement 21a, 21b, à l'aval de chaque organe coulissant 22a, 22b.

L'élément glissant 17 est conçu pour coulisser sous l'action respectivement de la bielle 18a ou 18b lorsque le ressort respectivement 23a ou 23b est comprimé dans le sens de la fermeture, ou lorsque le jeu 24 est consommé dans le sens de l'ouverture.

En conséquence, une porte dont la première bielle serait rompue est fermée ou ouverte lors du coulissement de l'élément glissant.

Le fonctionnement de l'élément glissant 17 sera décrit par la suite.

Le dispositif de détection 19 de la rupture d'une bielle 16a, 16b, 18a, 18b comporte quant à lui deux capteurs, respectivement supérieur 26a et inférieur 26b, tels que des vannes, capteurs de contact ou capteurs de proximité, agencé pour détecter la position des organes coulissants, respectivement supérieur 22a et inférieur 22b.

Le dispositif de détection 19 est agencé pour détecter la position relative des organes coulissants 21a, 21b en position de jet direct, par comparaison des données reçues par les capteurs 26a, 26b.

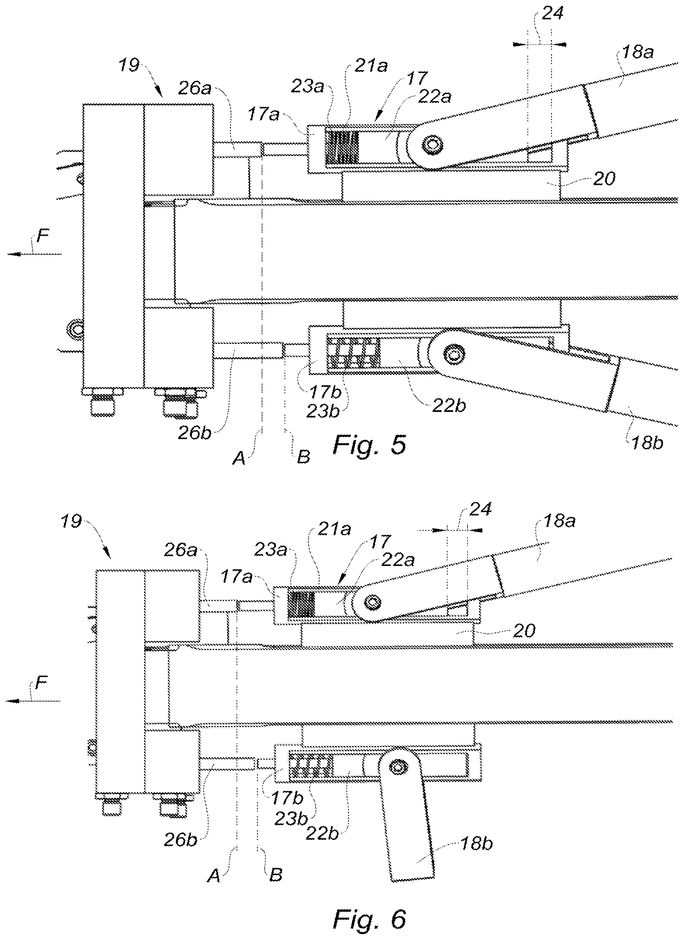

Le fonctionnement du système de fermeture de portes selon l'invention sera décrit au regard des figures 5 à 6.

La figure 5 illustre l'élément glissant 17 dans le cas où la porte supérieure 12a (non visible) est en position de jet direct et la première bielle inférieure 16b (non visible) est rompue, la porte inférieure 12b (non visible) étant donc soit dans une position de jet inversé, soit dans une position intermédiaire entre jet direct et jet inversé.

Lors de la fermeture des portes 12a, 12b, la deuxième bielle supérieure 18a, entraînée par la porte supérieure 12a (non visible), déplace tout d'abord l'organe coulissant supérieur 22a vers l'amont (flèche F), ce qui a pour conséquence de comprimer le ressort supérieur 23a.

Ainsi, le jeu 24 tel que décrit au regard de la figure 4 apparaît dans le logement supérieur 21a, à l'aval de l'organe coulissant supérieur 22a.

La deuxième bielle inférieure 18b en revanche ne déplace pas l'organe coulissant inférieur 22b. Le ressort inférieur 23b est en position détendue et l'organe coulissant inférieur 22b est sensiblement en contact avec l'élément glissant 17 au niveau de son extrémité aval.

Puis la deuxième bielle supérieure 18a, entraînée par la porte supérieure 12a (non visible), déplace l'élément glissant 17 vers l'amont (flèche F), ce qui a pour conséquence de déplacer l'organe coulissant inférieur 22b, sans toutefois comprimer le ressort inférieur 23b.

Par conséquent, la fermeture de la porte inférieure 12b (non visible) est forcée par le déplacement de l'élément glissant 17 vers l'amont (flèche F).

Le capteurs supérieur 26a du dispositif de détection 19, détecte une position A de l'organe coulissant supérieur 22a, le capteur inférieur 26b du dispositif de détection 19 détecte une position B de l'organe coulissant inférieur 22b, et le dispositif de détection 19 compare les positions A et B détectées.

Les positions étant différentes, le dispositif de détection 19 indique une position anormale de l'organe coulissant inférieur 22b qui est décalé vers l'aval par rapport à l'organe coulissant supérieur 22a.

Le dispositif de détection 19 détecte alors la rupture d'une bielle en comparant la position relative des deux organes coulissants 22a, 22b.

La figure 6 illustre l'élément glissant 17 dans le cas où les portes supérieure 12a et inférieure 12b (non visibles) sont en position de jet direct et la deuxième bielle inférieure 18b est rompue.

Lors de la fermeture des portes, la deuxième bielle supérieure 18a, entraîné par la porte supérieure 12a (non visible), déplace tout d'abord l'organe coulissant supérieur 22a vers l'amont (flèche F), ce qui a pour conséquence de comprimer le ressort supérieur 23a.

Ainsi, le jeu 24 tel que décrit au regard de la figure 4 apparaît dans le logement supérieur 21a, à l'aval de l'organe coulissant supérieur 22a.

La deuxième bielle inférieure 18b en revanche ne déplace pas l'organe coulissant inférieur 22b, bien que les deux portes 12a, 12b soit fermées. Le ressort inférieur 23b est en position détendue et l'organe coulissant inférieur 22b est sensiblement en contact avec l'élément glissant 17 au niveau de son extrémité aval.

Le capteurs supérieur 26a du dispositif de détection 19, détecte une position A de l'organe coulissant supérieur 22a, le capteur inférieur 26b du dispositif de détection 19 détecte une position B de l'organe coulissant inférieur 22b, et le dispositif de détection 19 compare les positions A et B détectées.

Les positions étant différentes, le dispositif de détection 19 indique une position anormale de l'organe coulissant inférieur 22b qui est décalé vers l'aval par rapport à l'organe coulissant supérieur 22a.

Le dispositif de détection 19 détecte alors la rupture d'une bielle en comparant la position relative des deux organes coulissants 22a, 22b.

Dans un mode de réalisation non représenté, le vérin double effet 15 est remplacé par un vérin simple effet de fermeture, agencé pour manoeuvrer les portes 12a, 12b vers la position de jet direct. Ce vérin simple effet de fermeture est un actionneur de fermeture. L'ouverture des portes est réalisée sous l'effet de la pression.

Dans une variante de ce mode de réalisation, un vérin simple effet d'ouverture (non représenté), est agencé sur la structure interne fixe 11 du côté opposé au vérin simple effet de fermeture, pour manoeuvrer les portes 12a, 12b vers la position de jet inversé. Ce vérin simple effet d'ouverture est un actionneur d'ouverture.

Selon cette variante, le vérin simple effet d'ouverture est relié à chaque deuxièmes bielles 18a, 18b. Il est conçu pour actionner l'ouverture des portes 12a, 12b via ces deuxièmes bielles 18a, 18b.

Plus particulièrement, le vérin simple effet d'ouverture est relié à chaque organe coulissant 22a, 22b de l'élément glissant 17. Il est conçu pour actionner le coulissement des organes coulissants 22a, 22b dans le sens de l'ouverture des portes 12a, 12b.

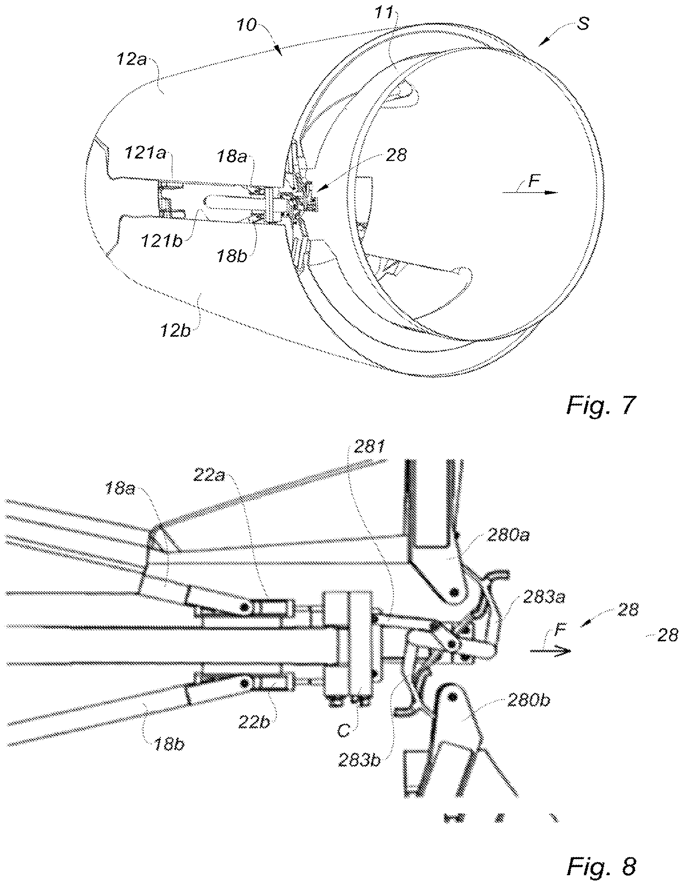

La figure 7 représente la partie de section aval S de la figure 1, vue de l'autre côté. L'amont de la section aval S est défini par la flèche F.

Un système de verrouillage 28 de portes est disposé sur la structure interne fixe 11, au niveau du deuxième bord latéral 121a, 121b des portes 12a, 12b.

Le système de verrouillage 28 de portes est illustré en position fermée.

La figure 8 représente le système de verrouillage actif 28 en position de déverrouillage bloqué de portes en position ouverte, comportant :
- deux moyens de verrouillage, respectivement supérieur 280a et inférieur 280b, sous forme de crochets,
- un actionneur 281 des moyens de verrouillage 280a, 280b, sous forme de vérin,
- deux moyens de blocage, respectivement supérieur 282a et inférieur 282b, des moyens de verrouillage 280a, 280b, sous forme d'entraves, et
- deux dispositifs de déplacement, respectivement supérieur 22a et inférieur 22b, des moyens de blocage, respectivement supérieur 282a et inférieur 282b, sous forme d'organes coulissants.

Les crochets 280a, 280b, sont agencés pour laisser passer un galet, respectivement supérieur 29a et inférieur 29b, solidaire d'une porte, respectivement supérieure 12a et inférieure 12b (figure 7), de façon à permettre l'ouverture et la fermeture de ladite porte.

Ils sont en position de déverrouillage.

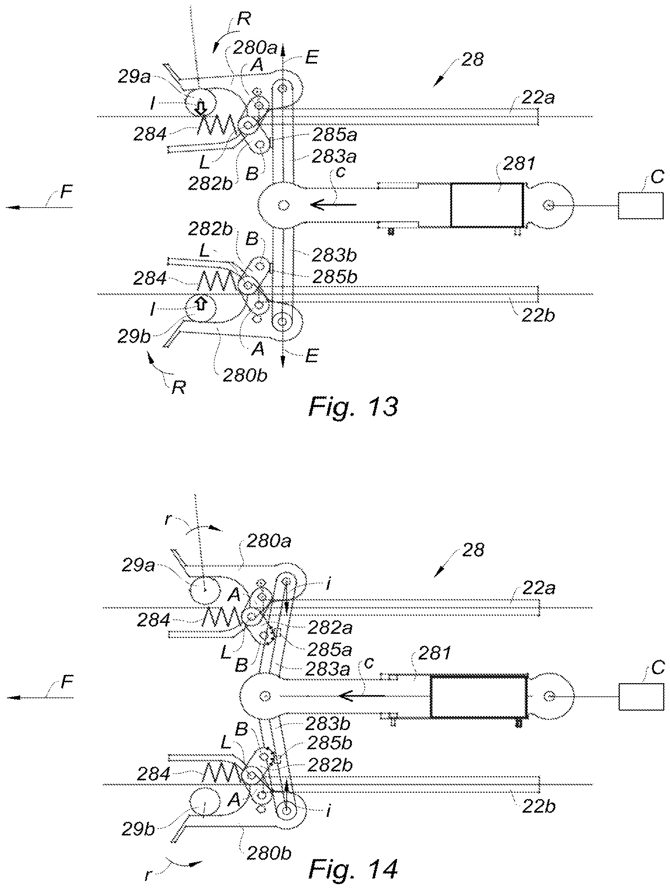

Les crochets 280a, 280b, sont montés pivotants entre cette position de déverrouillage et une position de verrouillage (figure 14) dans laquelle ils emprisonnent les galets 29a, 29b, afin de verrouiller les portes en position de fermeture.

L'actionneur 281 des crochets 280a, 280b, est relié auxdits crochets 280a, 280b, par des biellettes, respectivement supérieure 283a et inférieure 283b.

L'actionneur 281 des crochets 280a, 280b, est commandé par une commande de verrouillage C agencée pour commander à la fois le verrouillage des crochets 280a, 280b, et la fermeture des portes.

Ainsi, lorsque la fermeture des portes est commandée, le verrouillage des crochets est simultanément commandé par déplacement de l'actionneur 281 des crochets 280a, 280b selon la flèche c.

Les entraves 282a, 282b, sont agencés pour bloquer la rotation des crochets 280a, 280b vers la position de verrouillage, malgré la commande en verrouillage.

Elles sont en position de blocage.

Elles comprennent un premier bras A et un second bras B, reliés entre eux pas une liaison rotule L.

Les premier et second bras A, B sont articulés entre eux.

Le premier bras A est fixé au crochet 280a, 280b, tandis que le second bras B est fixé à la structure interne fixe 11 (figure 7).

Une butée fixe, respectivement supérieure 285a et inférieure 285b, est disposée sur la structure interne fixe 11 (figure 7), de sorte à limiter le mouvement du second bras B au-delà d'un certain angle pour assurer la fonction de blocage.

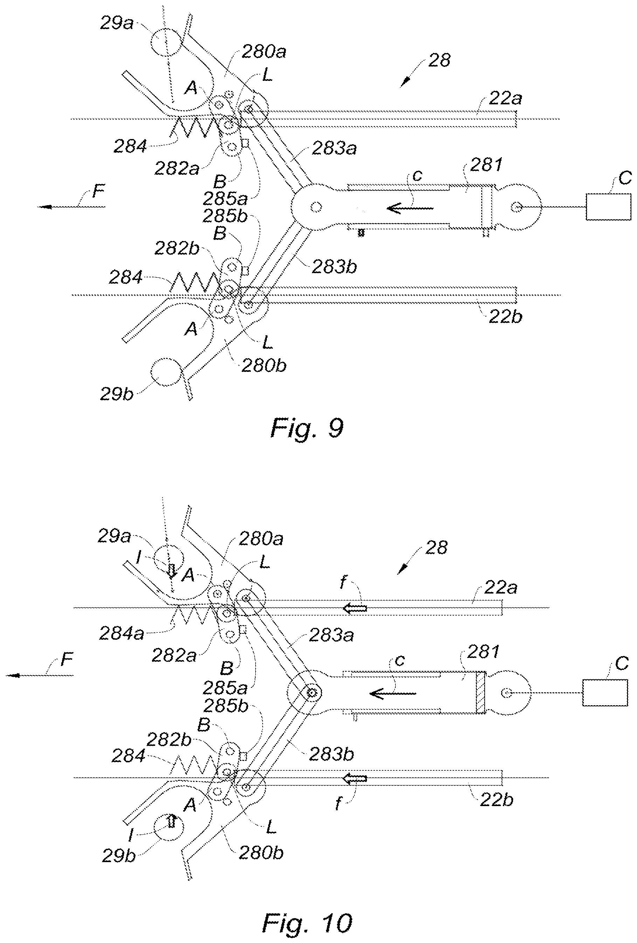

Les entraves 282a, 282b sont montées mobiles entre cette position de blocage et une position de déblocage (figure 10) dans laquelle elles autorisent la rotation des crochets 280a, 280b vers la position de verrouillage (figure 14).

Les dispositifs de déplacement 22a, 22b des entraves 282a, 282b sont aptes à coulisser de sorte à débloquer les entraves, lorsque les portes sont en position sensiblement fermée.

Ils sont disposés à l'aval des entraves 282a, 282b.

L'aval est la direction opposée à l'amont, l'amont étant représenté par la flèche F.

Ils sont reliés aux portes, respectivement supérieure 12a et inférieure 12b (figure 7), de façon à coulisser en direction des entraves 282a, 282b, c'est à dire dans la direction amont, lors de la fermeture des portes jusqu'à atteindre les rotules L ou le second bras B des entraves 282a, 282b.

Ainsi, lorsque les portes sont en position sensiblement fermée (figure 7), les entraves 282a, 282b sont débloquées et les crochets peuvent pivoter en position de verrouillage.

Un ressort de blocage 284 disposé à l'amont des entraves 282a, 282b, permet d'exercer une force contre les entraves 282a, 282b, au niveau de leur rotule L, dans la direction opposée au déplacement de l'organe coulissant 22a, 22b lors de la fermeture de la porte, c'est à dire dans la direction aval.

Ainsi, le ressort de blocage 284 permet de positionner l'entrave 282a, 282b dans la position de blocage.

Dans cette position de blocage, seul un coulissement de l'organe coulissant 22a, 22b, dans la direction amont est conçu pour déplacer l'entrave 282a, 282b dans sa position de déblocage, en comprimant le ressort de blocage 284.

La figure 10 représente le système de verrouillage actif 28 en position de déverrouillage débloqué de portes en cours de fermeture.

Lors de la fermeture des portes, les organes coulissants 22a, 22b coulissent selon les flèches « f », dans la direction amont.

Lorsqu'ils entrent en contact avec la liaison rotule L des entraves 282a, 282b, ils déplacent les entraves 282a, 282b, dans leur position de déblocage.

Lorsqu'ils entrent en contact avec cette liaison rotule L, les galets 29a, 29b solidaires des portes sont disposés à l'intérieur des crochets 280a, 280b.

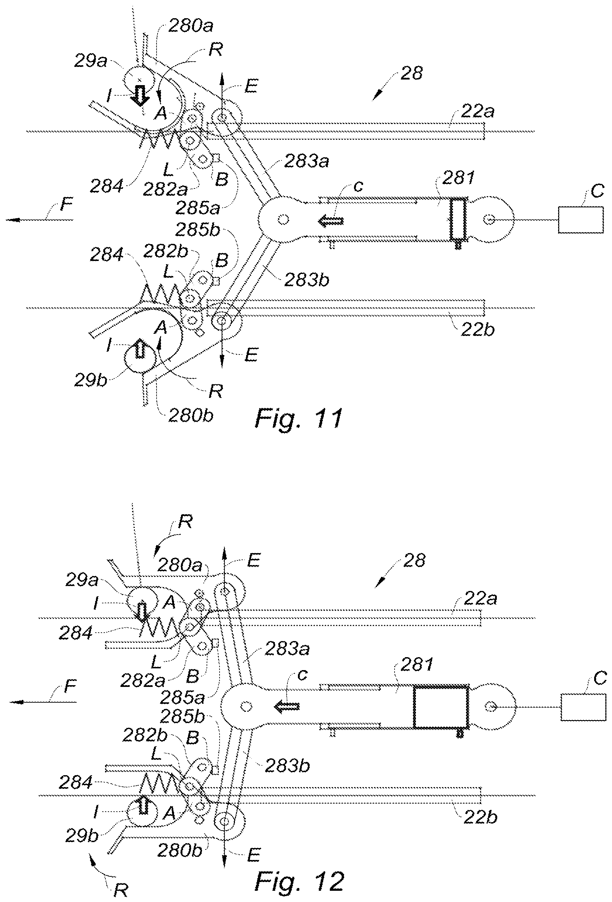

Dans cette position de déblocage, l'actionneur 281 des moyens de verrouillage 280a, 280b est conçu pour faire pivoter les crochets 280a, 280b, par l'intermédiaire des biellettes 283a, 283b (figure 11).

Le ressort de blocage 284 est alors comprimé par les entraves 282a, 282b déplacées par les organes coulissants 22a, 22b.

La figure 11 représente le système de verrouillage actif 28 en position de verrouillage actif de portes en cours de fermeture.

L'actionneur 281 des moyens de verrouillage 280a, 280b déplace l'extrémité des biellettes 283a, 283b qui lui sont attachées, vers l'amont.

Ainsi, l'extrémité des biellettes 283a, 283b attachée aux crochets est déplacée vers l'extérieur, selon les flèches E.

Ce déplacement des biellettes 283a, 283b, entraine une rotation des crochets 280a, 280b dans un premier sens indiqué par les flèches R.

Les crochets 280a, 280b entrent alors en contact avec les galets 29a, 29b solidaires des portes et les déplacent vers l'intérieur, selon les flèches I, ce qui entraine les portes en position de fermeture.

Le système de verrouillage actif 28 est donc en position de verrouillage actif.

Il permet d'assister la fermeture des portes.

Les entraves 282a, 282b, sont également déplacés en suivant le mouvement des crochets 280a, 280b et compriment les ressorts de blocage 284.

La figure 12 représente le système de verrouillage actif 28 en position de verrouillage débloqué de portes en position fermée.

L'actionneur 281 des moyens de verrouillage 280a, 280b déplace encore l'extrémité des biellettes 283a, 283b attaché aux crochets, vers l'extérieur, selon les flèches E.

Ce déplacement des biellettes 283a, 283b, entraine une rotation des crochets 280a, 280b dans un premier sens indiqué par les flèches R, ce qui permet de déplacer les galets 29a, 29b vers l'intérieur selon les flèches I. Les portes sont alors en position fermée.

Dans cette position, les biellettes 283a, 283b autorisent la rotation des crochets 280a, 280b vers la position de déverrouillage (figures 9 et 10).

Le système de verrouillage actif 28 est donc en position de verrouillage débloqué.

La figure 13 représente le système de verrouillage actif 28 en position de verrouillage débloqué de portes en position sur-escamotée.

L'actionneur 281 des moyens de verrouillage 280a, 280b déplace encore l'extrémité des biellettes 283a, 283b attaché aux crochets, vers l'extérieur, selon les flèches E.

Ce déplacement des biellettes 283a, 283b, entraine une rotation des crochets 280a, 280b dans le premier sens indiqué par les flèches R, ce qui permet de déplacer les galets 29a, 29b vers l'intérieur selon les flèches I. Les portes sont alors en position sur-escamotée.

Par position sur-escamotée on entend que les portes sont fermées au-delà de leur position de repos normal.

Dans cette position, les biellettes 283a, 283b autorisent la rotation des crochets 280a, 280b vers la position de déverrouillage (figures 9 et 10).

Le système de verrouillage actif 28 est donc en position de verrouillage débloqué.

La figure 14 représente le système de verrouillage actif 28 en position de verrouillage bloqué de portes en position fermée.

L'actionneur 281 des moyens de verrouillage 280a, 280b déplace l'extrémité des biellettes 283a, 283b qui lui sont attachées, vers l'amont.

Ainsi, l'extrémité des biellettes 283a, 283b attachée aux crochets est déplacée vers l'intérieur, selon les flèches « i ».

Ce déplacement des biellettes 283a, 283b, entraine une rotation des crochets 280a, 280b dans le sens opposé au premier sens, indiqué par les flèches « r ».

Les portes sont alors en position de fermeture.

Les entraves 282a, 282b, sont également déplacées en suivant le mouvement des crochets 280a, 280b.

Dans cette position, les biellettes 283a, 283b n'autorisent pas la rotation des crochets 280a, 280b vers la position de déverrouillage (figures 9 et 10).

Les biellettes 283a, 283b sont en position de blocage des crochets 280a, 280b.

Le système de verrouillage actif 28 est donc en position de verrouillage bloqué.

Le système de verrouillage 28 est actionné lorsque le dispositif de détection 19 ne détecte pas de rupture de bielle 16a, 16b, 18a, 18b.

## Revendications

1. Système de fermeture d'une paire de porte (12a, 12b) pour inverseur de poussée (10) d'une nacelle d'aéronef, les portes (12a, 12b) étant diamétralement opposées et montées pivotantes entre une position de jet direct, dans laquelle elles assurent la continuité aérodynamique de la nacelle, et une position de jet inversé dans laquelle elles ouvrent au moins un passage (14) dans la nacelle, le système de fermeture comprenant :
- un actionneur de fermeture (15) des portes (12a, 12b) comportant deux premières bielles (16a, 16b), chaque première bielle étant configurée pour être reliée à un premier bord latéral (120a, 120b) de chaque porte (12a, 12b), ledit actionneur étant agencé pour manoeuvrer chaque porte au moins vers la position de jet direct, le système étant **caractérisé en ce qu'**il comprend :
- deux organes coulissants (22a, 22b) portant chacun une deuxième bielle (18a, 18b) configurée pour être reliée au bord latéral opposé (121a, 121b) au premier bord latéral (120a, 120b) de chaque porte (12a, 12b), lesdites bielles étant agencées pour être entraînées par les portes lorsque l'actionneur de fermeture (15) manoeuvre les portes vers la position de jet direct, de façon à déplacer les organes coulissants (22a, 22b), et
- un dispositif de détection (19) de rupture d'une bielle agencé pour détecter la position relative des organes coulissants (22a, 22b) en position de jet direct.

2. Système de fermeture selon la revendication 1, dans lequel l'actionneur de fermeture (15) est agencé pour manoeuvrer les portes (12a, 12b) vers la position de jet direct et vers la position de jet inversé.

3. Système de fermeture selon la revendication 1, dans lequel l'actionneur de fermeture (15) est agencé pour manoeuvrer les portes (12a, 12b) vers la position de jet direct, et le système de fermeture comprend un actionneur d'ouverture agencé pour manoeuvrer les portes (12a, 12b) vers la position de jet inversé via les deuxièmes bielles (18a, 18b).

4. Système de fermeture selon l'une quelconque des revendications précédentes, dans lequel le système de fermeture comporte un ressort (23a, 23b) disposé aux extrémités proximales de chaque organe coulissant (22a, 22b), par rapport au dispositif de détection (19) de rupture d'une bielle, et une butée (17a, 17b) de fin de course disposée entre le dispositif de détection (19) de rupture d'une bielle et chaque ressort (23a, 23b), les butées (17a, 17b) de fin de course sont reliées par un dispositif de liaison (20), chaque ressort (23a, 23b) permettant d'exercer une force contre l'organe coulissant (22a, 22b) associé, dans la direction opposée au déplacement engendré par les deuxièmes bielles (18a, 18b) entraînées par les portes en position de jet direct.

5. Système de fermeture selon la revendication précédente, dans lequel les butées (17a, 17b) de fin de course et le dispositif de liaison (20) sont coulissants.

6. Système de fermeture selon la revendication précédente, dans lequel les butées (17a, 17b) de fin de course et le dispositif de liaison (20) forment un élément glissant (17) comportant deux logements (21a, 21b), chaque logement comportant un organe coulissant (22a, 22b), un ressort (23a, 23b) et une butée (17a, 17b) de fin de course.

7. Système de fermeture selon la revendication précédente, dans lequel l'élément glissant (17) est conçu pour coulisser sous l'action d'au moins une des deuxièmes bielles (18a, 18b), lorsque le ressort (23a, 23b) est comprimé dans le sens de la fermeture.

8. Système de fermeture selon l'une quelconque des revendications précédentes, comprenant en outre un système de verrouillage (28) de portes en position fermée.

9. Système de fermeture selon la revendication précédente, dans lequel le système de verrouillage (28) est configuré pour être disposé du côté opposé à l'actionneur de fermeture (15).

10. Système de fermeture selon l'une quelconque des revendications 8 à 9, dans lequel le système de verrouillage (28) est agencé pour être actionné lorsque le dispositif de détection (19) ne détecte pas de rupture de bielle.

11. Système de fermeture selon l'une quelconque des revendications 8 à 10, dans lequel le système de verrouillage de portes comporte au moins un moyen de verrouillage actif capable d'assister la fermeture des portes (12a, 12b) en appliquant un effort fermant celles-ci, ledit moyen de verrouillage actif étant mobile entre une position de verrouillage et une position de déverrouillage.

12. inverseur de poussée d'une nacelle d'aéronef, l'inverseur de poussée (10) étant du type comportant au moins une paire de portes (12a, 12b) diamétralement opposées, lesdites portes étant montées pivotantes entre une position de jet direct, dans laquelle elles assurent la continuité aérodynamique de la nacelle, et une position de jet inversé dans laquelle elles ouvrent au moins un passage (14) dans la nacelle, **caractérisé en ce que** l'inverseur de poussée (10) comprend un système de fermeture des portes selon l'une quelconque des revendications 1 à 11.

13. Procédé d'utilisation d'un système de fermeture d'une paire de porte selon l'une quelconque des revendications 1 à 11, **caractérisé en ce qu'**il comprend une étape de comparaison de la position relative des organes coulissants (22a, 22b).

14. Procédé d'utilisation d'un système de fermeture d'une paire de porte selon l'une quelconque des revendications 8 à 11, **caractérisé en ce qu'**il comprend une étape de verrouillage des portes en position de jet direct lorsque le dispositif de détection ne détecte pas de décalage entre les organes coulissants (22a, 22b).

## Patentansprüche

1. Schließsystem für ein Paar Türen (12a, 12b) für einen Schubumkehrer (10) einer Flugzeuggondel, wobei die Türen (12a, 12b) diametral gegenüberliegend und schwenkbar zwischen einer Direktstrahlposition, in der sie für aerodynamische Kontinuität der Gondel sorgen, und einer Umkehrstrahlposition, in der sie mindestens einen Durchlass (14) in der Gondel öffnen, montiert sind, wobei das Schließsystem Folgendes umfasst:
- einen Schließaktuator (15) für die Türen (12a, 12b), der zwei erste Verbindungsstangen (16a, 16b) umfasst, wobei jede erste Verbindungsstange so konfiguriert ist, dass sie mit einer ersten Seitenkante (120a, 120b) jeder Tür (12a, 12b) verbunden wird, wobei der Schließaktuator so konfiguriert ist, dass er jede Tür mindestens in Richtung der Direktstrahlposition bewegt, wobei das System **dadurch gekennzeichnet ist, dass** es Folgendes umfasst:
- zwei Gleitelemente (22a, 22b), die jeweils eine zweite Verbindungsstange (18a, 18b) tragen, die so konfiguriert ist, dass sie mit einer der ersten Seitenkante (120a, 120b) gegenüberliegenden Seitenkante (121a, 121b) jeder Tür (12a, 12b) verbunden werden kann, wobei die Verbindungsstangen so konfiguriert sind, dass sie von den Türen angetrieben werden, wenn der Schließaktuator (15) die Türen in Richtung der Direktstrahlposition bewegt, um die beiden Gleitelemente (22a, 22b) zu verschieben; und
- eine Detektionsvorrichtung (19) für einen Defekt einer Verbindungsstange, die so angeordnet ist, dass sie die relative Position der Gleitelemente (22a, 22b) in der Direktstrahlposition detektiert.

2. Schließsystem nach Anspruch 1, wobei der Schließaktuator (15) so konfiguriert ist, dass er die Türen (12a, 12b) in Richtung der Direktstrahlposition und in Richtung der Umkehrstrahlposition bewegt.

3. Schließsystem nach Anspruch 1, wobei der Schließaktuator (15) so angeordnet ist, dass er die Türen (12a, 12b) in Richtung der Direktstrahlposition bewegt, und das Schließsystem einen Öffnungsaktuator umfasst, der so angeordnet ist, dass er die Türen (12a, 12b) über die zweiten Verbindungsstangen (18a, 18b) in Richtung der Umkehrstrahlposition bewegt.

4. Schließsystem nach einem der vorhergehenden Ansprüche, wobei das Schließsystem ferner eine Feder (23a, 23b), die an proximalen Enden jedes Gleitelements (22a, 22b) im Verhältnis zur Detektionsvorrichtung (19) für einen Defekt einer Verbindungsstange angeordnet ist, und einen Endanschlag (17a, 17b) aufweist, der zwischen der Detektionsvorrichtung (19) für einen Defekt einer Verbindungsstange und jeder Feder (23a, 23b) angeordnet ist, wobei die Endanschläge (17a, 17b) durch eine Verbindungsvorrichtung (20) verbunden sind, wobei jede Feder (23a, 23b), die es ermöglicht, eine Kraft auf ein zugehöriges Gleitelement (22a, 22b) in einer Richtung auszuüben, die einer Verschiebung entgegengesetzt ist, die durch die zweiten Verbindungsstangen (18a, 18b) erzeugt wird, von den Türen in der Direktstrahlposition angetrieben wird.

5. Schließsystem nach dem vorhergehenden Anspruch, wobei die Endanschläge (17a, 17b) und die Verbindungsvorrichtung (20) gleitend sind.

6. Schließsystem nach dem vorhergehenden Anspruch, wobei die Endanschläge (17a, 17b) und die Verbindungsvorrichtung (20) ein Schiebeelement (17), das zwei Gehäuse (21a, 21b) aufweist, bilden, wobei jedes Gehäuse ein Gleitelement (22a, 22b), eine Feder (23a, 23b) und einen Endanschlag (17a, 17b) aufweist.

7. Schließsystem nach dem vorhergehenden Anspruch, wobei das Schiebeelement (17) so ausgelegt ist, dass es unter der Wirkung mindestens einer der zweiten Verbindungsstangen (18a, 18b) gleitet, wenn die Feder (23a, 23b) in Schließrichtung zusammengedrückt wird.

8. Schließsystem nach einem der vorhergehenden Ansprüche, das ferner ein Verriegelungssystem (28) für Türen in geschlossener Position umfasst.

9. Schließsystem nach dem vorhergehenden Anspruch, wobei das Verriegelungssystem (28) so konfiguriert ist, dass es auf einer Seite gegenüber dem Schließaktuator (15) angeordnet ist.

10. Schließsystem nach einem der Ansprüche 8 bis 9, wobei das Verriegelungssystem (28) so angeordnet ist, dass es betätigt wird, wenn die Detektionsvorrichtung (19) keine defekte Verbindungsstange detektiert.

11. Schließsystem nach einem der Ansprüche 8 bis 10, wobei das Verriegelungssystem für Türen mindestens ein aktives Verriegelungsmittel umfasst, das dazu in der Lage ist, das Schließen der Türen (12a, 12b) durch Aufbringen einer Kraft darauf zu unterstützen, wobei das aktive Verriegelungsmittel zwischen einer Verriegelungsposition und einer Entriegelungsposition bewegbar ist.

12. Schubumkehrer einer Flugzeuggondel, wobei der Schubumkehrer (10) von dem Typ ist, der mindestens ein Paar Türen (12a, 12b) aufweist, die einander diametral gegenüberliegen, wobei die Türen schwenkbar zwischen einer Direktstrahlposition, in der sie für aerodynamische Kontinuität der Gondel sorgen, und einer Umkehrstrahlposition, in der sie mindestens einen Durchlass (14) in der Gondel öffnen, montiert sind, **dadurch gekennzeichnet, dass** der Schubumkehrer (10) ein Schließsystem für die Türen nach einem der Ansprüche 1 bis 11 umfasst.

13. Verfahren zum Verwenden eines Schließsystems für ein Paar Türen nach einem der Ansprüche 1 bis 11, **dadurch gekennzeichnet, dass** es einen Schritt des Vergleichens der relativen Position der Gleitelemente (22a, 22b) umfasst.

14. Verfahren zum Verwenden eines Schließsystems für ein Paar Türen nach einem der Ansprüche 8 bis 11, **dadurch gekennzeichnet, dass** es einen Schritt des Verriegelns der Türen in der Direktstrahlposition umfasst, wenn die Detektionsvorrichtung keinen Versatz zwischen den Gleitelementen (22a, 22b) detektiert.

## Claims

1. A system for closing a pair of doors (12a, 12b) for a thrust reverser (10) of an aircraft nacelle, the doors (12a, 12b) being diametrically opposed and pivotally mounted between a direct jet position, in which they ensure the aerodynamic continuity of the nacelle, and a reverse jet position in which they open at least one passage (14) in the nacelle, the closing system comprising:
- a actuator (15) for closing the doors (12a, 12b) comprising two first connecting rods (16a, 16b), each first connecting rod being configured to be connected to a first lateral edge (120a, 120b) of each door (12a, 12b), said actuator being arranged to maneuver each door at least towards the direct jet position,
- two sliding members (22a, 22b) each carrying a second connecting rod (18a, 18b) configured to be connected to a lateral edge (121a, 121b) opposite to the first lateral edge (120a, 120b) of each door (12a, 12b), said connecting rods being arranged to be driven by the doors when the closing actuator (15) maneuvers the doors towards the direct jet position, so as to displace the sliding members (22a, 22b), and
- a connecting rod breakage detection device (19) arranged to detect the relative position of the sliding members (22a, 22b) in the direct jet position.

2. The closing system according to claim 1, wherein the closing actuator (15) is arranged to maneuver the doors (12a, 12b) towards the direct jet position and towards the reverse jet position.

3. The closing system according to claim 1, wherein the closing actuator (15) is arranged to maneuver the doors (12a, 12b) towards the direct jet position, and the closing system comprises an opening actuator arranged to maneuver the doors (12a, 12b) towards the reverse jet position via the second connecting rods (18a, 18b).

4. The closing system according to any one of the preceding claims, wherein the closing system comprises a spring (23a, 23b) disposed at the proximal ends of each sliding member (22a, 22b), relative to the connecting rod breakage detection device (19), and an end stop (17a, 17b) disposed between the connecting rod breakage detection device (19) and each spring (23a, 23b), the end stops (17a, 17b) are connected by a connecting device (20), each spring (23a, 23b) allowing to exert a force against the associated sliding member (22a, 22b), in the direction opposite to the displacement generated by the second connecting rods (18a, 18b) driven by the doors in the direct jet position.

5. The closing system according to the preceding claim, wherein the end stops (17a, 17b) and the connecting device (20) are sliding.

6. The closing system according to the preceding claim, wherein the end stops (17a, 17b) and the connecting device (20) form a gliding element (17) comprising two housings (21a, 21b), each housing comprising a sliding member (22a, 22b), a spring (23a, 23b) and an end stop (17a, 17b).

7. The closing system according to the preceding claim, wherein the gliding element (17) is designed to slide under the action of at least one of the second connecting rods (18a, 18b), when the spring (23a, 23b) is compressed in the closing direction.

8. The closing system according to any one of the preceding claims, further comprising a system (28) for locking the doors in the closed position.

9. The closing system according to the preceding claim, wherein the locking system (28) is configured to be disposed on the side opposite to the closing actuator (15).

10. The closing system according to any one of claims 8 and 9, wherein the locking system (28) is arranged to be actuated when the detection device (19) does not detect a connecting rod breakage.

11. The closing system according to any one of claims 8 to 10, wherein the door locking system comprises at least one active locking means capable of assisting the closing of the doors (12a, 12b) by applying a force closing thereof, said active locking means being movable between a locking position and an unlocking position.

12. A thrust reverser of an aircraft nacelle, the thrust reverser (10) being of the type comprising at least one pair of doors (12a, 12b) diametrically opposed, said doors being pivotally mounted between a direct jet position, in which they ensure the aerodynamic continuity of the nacelle, and a reverse jet position in which they open at least one passage (14) in the nacelle, **characterized in that** the thrust reverser (10) comprises a door closing system according to any one of claims 1 to 11.

13. A method for using a system for closing a pair of doors according to any one of claims 1 to 11, **characterized in that** it comprises a step of comparing the relative position of the sliding members (22a, 22b).

14. The method for using a system for closing a pair of doors according to any one of claims 8 to 11, **characterized in that** it comprises a step of locking the doors in the direct jet position when the detection device does not detect any offset between the sliding members (22a, 22b).
